Europäisches Patentamt

European Patent Office

Office européen des brevets

(19)

(11) **EP 0 895 387 A1**

(12) **EUROPÄISCHE PATENTANMELDUNG**

(43) Veröffentlichungstag:
03.02.1999 Patentblatt 1999/05

(51) Int. Cl.$^6$: **H04L 27/26**, H04L 27/00,
H04H 1/00

(21) Anmeldenummer: 97112929.1

(22) Anmeldetag: 28.07.1997

(84) Benannte Vertragsstaaten:
**AT BE CH DE DK ES FI FR GB GR IE IT LI LU MC NL PT SE**

(71) Anmelder:
**DEUTSCHE THOMSON-BRANDT GMBH
78048 Villingen-Schwenningen (DE)**

(72) Erfinder:
• **Klank, Otto
31275 Lehrte-Arpke (DE)**
• **Klausberger, Wolfgang
30880 Laatzen (DE)**
• **Laabs, Jürgen
30982 Pattensen (DE)**

(54) **Erkennung des Übertragungsmodus eines DVB-Signales**

(57) Zur Abstimmung, beim Empfang, erfolgt eine grobe Symbolsynchronisation, wobei das Signal im Zeitbereich korreliert wird, mit verschiedenen, den möglichen Übertragungsmodi entsprechenden, zeitlichen verschobenen Kopien von sich selbst. Davon werden der aktuelle Modus, das aktuelle Schutzintervall, und ein Abtastfenster geleitet.

Fig.1

EP 0 895 387 A1

**Beschreibung**

Die Erfindung betrifft ein Verfahren und einen Empfänger für den Empfang von Multicarrier-Digitalsignalen.

Stand der Technik

Für die terrestrische Übertragung von digitalen Fernseh- und Rundfunksignalen (im folgenden allgemein Rundfunksignale genannt) können Modulation-Typen wie OFDM, QPSK und QAM verwendet werden. Beispiele für solche Rundfunksignale sind DVB (digital video broadcast), HDTV-T (hierarchical digital television transmission) und DAB (digital audio broadcast). Das DVB-System ist in seinen Grundlagen in ETS 300 744 spezifiziert.
Die Daten der digitalen Rundfunksignale sind in zweidimensionalen (Zeit und Frequenz, im Folgenden als 'temporalspektral' bezeichnet) Rahmen oder Frames angeordnet, die eine zeitliche Länge von $T_F$ haben und im Fall von ETS 300 744 aus 68 OFDM-Symbolen bestehen. Vier Rahmen bilden einen Super-Rahmen. Bei den obengenannten Übertragungs-Systemen für digitale Audio- oder Videosignale sind verschiedene Übertragungs-Modi möglich. Im Fall von ETS 300 744 werden die Symbole der Dauer $T_s$ gebildet aus jeweils 1705 Trägern (2K-Mode) oder aus jeweils 6817 Trägern (8K-Mode) mit unterschiedlichen Frequenzen.
Der 2K-Mode ist insbesondere für einzelne Sender und kleine SFN-Netzwerke (single frequency network) mit begrenzten Sender-Abständen geeignet.
Der 8K-Mode kann für einzelne Sender und für kleine und große SFN-Netzwerke verwendet werden.
Die Symbole haben eine zeitliche Länge von $T_s$ mit einem Nutzteil der Länge $T_u$ und einem Guard-Intervall der Länge $\Delta$. Das Guard-Intervall wird durch eine zyklische Fortsetzung des Nutzteils gebildet und ist zeitlich vor diesem angeordnet. Alle Symbole enthalten Daten und Referenz-Information. Jedes Symbol kann als eine Gruppe von Zellen angesehen werden, wobei jedem Träger eine Zelle entspricht.
Die Rahmen enthalten außer den eigentlichen Bild-, Ton-, oder sonstigen Daten verstreute Pilotzellen (scattered pilots), kontinuierliche Pilotsignalen und TPS-Träger oder -Pilots (transmission parameter signalling) . Diese sind z.B. in ETS 300 744, März 1997, in den Kapiteln 4.4. bis 4.6 beschrieben.
Die Pilotzellen bzw. -Träger enthalten Referenz-Information, deren übertragener Wert dem Empfänger bekannt ist. Die kontinuierlichen Pilotsignalen können beispielsweise bei jedem vierten Symbol mit einer verstreuten Pilotzelle in Koinzidenz sein. Der Wert bzw. Inhalt der verstreuten und kontinuierlichen Pilotsignalen ist z.B. von einer Pseudo-Zufalls-Binärsequenz $w_k$ für jeden der übertragenen Träger k abgeleitet. Die Sequenz $w_k$ kann auch die Startphase der TPS-Trägerinformation bestimmen. Die Pilotzellen bzw. -Träger können empfängerseitig zur Rahmen-Synchronisation, Frequenz-Synchronisation, Zeit-Synchronisation, Kanalschätzung und Übertragungs-Mode-Identifizierung verwendet werden. Ob und wie diese Möglichkeiten empfängerseitig genutzt werden, bleibt dem Empfänger-Hersteller überlassen.
In EP-A-0 786 889 ist ein entsprechendes System für die Ahwendung bei DAB beschrieben.

Erfindung

Ein wichtige Überlegung im Zusammenhang mit solchen Systemen ist es, ein systemkonformes Signal in dem Fall zu finden, wo ein Empfänger eingeschaltet oder auf einen anderen Kanal abgestimmt wird. Dazu muß der Empfänger verschiedenen Dienste voneinander unterscheiden können, z.B. digitale Signale von analogen Signalen oder digitale DVB-Signale von digitalen DAB-Signalen. In bestimmten Frequenzbereichen können sowohl Digitalsignale als auch Analogsignale (z.B. PAL-Fernsehsignale) vorkommen, wobei die Zentrums-Frequenzen von den vorgegebenen Kanal-Mittenfrequenzen abweichen können.
Der Erfindung liegt die Aufgabe zugrunde, ein verbessertes Verfahren zur Abstimmung beim Empfang von Multicarrier-Digitalsignalen oder zur Überprüfung der Systemkonformität solcher empfangenen Digitalsignale anzugeben. Diese Aufgabe wird durch das in Anspruch 1 angegebene Verfahren gelöst.
Der Erfindung liegt die weitere Aufgabe zugrunde, einen Empfänger zur Anwendung des erfindungsgemäßen Verfahrens anzugeben. Diese Aufgabe wird durch den in Anspruch 13 angegebenen Empfänger gelöst.
Empfängerseitig wird zunächst eine grobe Zeit-Synchronisation verbunden mit einer Mode-Detektion und eventuell zusätzlich eine grobe AFC (automatic frequency correction) sowohl beim Suchen und Identifizieren von Empfangssignalen als auch bei deren ständiger Überwachung durchgeführt.
Bei der groben Zeit-Synchronisation wird das Zeitsignal mit dem um eine Nutzsymbollänge $T_u$ verschobenen Zeitsignal korreliert. Diese Korrelation kann mehrfach, z.B. fünfmal pro Daten-Frame durchgeführt werden. Bei dieser Korrelation werden Signalproben mit verschiedener Länge $T_u$ entsprechend dem jeweiligen Mode verwendet und anhand der sich ergebenden Korrelations-Ergebnis-Maxima wird dann auf den aktuell vorliegenden Mode (z.B. 2K- oder 8K-Mode) geschlossen. Falls sich kein brauchbares Korrelations-Ergebnis-Maximum ergibt, können die Korrelationsschritte wiederholt werden.
Aus dem Abstand und/oder der Amplitude der Maxima wird unter Berücksichtigung des Modes das verwendete Guardintervall ermittelt und nachfolgend ein Abtastfenster positioniert.

Dies kann durch einmaliges Setzen eines zur Symbolfolge ($T_u$+$\Delta$) synchronen Zählers erfolgen, der ein Zeitfenster mit Dauer $T_u$ ausgibt. Dieses Zeitfenster wird im folgenden auch mit Abtastfenster oder FFT-Fenster bezeichnet. Ein dabei benutzter Basisoszillator und damit auch die Position des Fensters werden in späteren Schritten über eine Zeit-Feinsynchronisation nachgeregelt.

Falls der Mode richtig erkannt und das Abtastfenster annähernd korrekt positioniert wurde, kann eine FFT mit dem Mode entsprechender Länge erfolgen. Statt einer FFT kann bei der Erfindung ganz allgemein eine Fourier-Transformation oder eine sonstige Transformation, die eine frequenz-spektrale Darstellung vom Zeitbereich in den Frequenzbereich ermöglicht, zum Einsatz kommen. Aus dem so umgewandelten Signal werden Pilotzellen nach dem vorgesehenen Anordnungsschema entnommen und mit dem gemäß Spezifikation vorgesehenen Werten korreliert. Nach Spezifikation sind z.B. beim 2K-Mode 45 Positionen und beim 8K-Mode 177 Positionen des Spektrums mit kontinuierlichen Pilotsignalen belegt. Zur Korrelation werden z.B. beim 2K-Mode $\pm$16 solcher Sätze (über $\pm$16 Trägerab-stände) und beim 8K- Mode $\pm$64 solcher Sätze (über $\pm$64 Trägerabstände) benutzt. Über die durchgeführten Korrelationsschritte ergibt sich ein Korrelationsmaximum und möglicherweise in direkter Nachbarschaft einige Nebenmaxima mit geringerer Amplitude. Aus der Position des Maximums kann die Frequenzablage des Basisband-Signals ermittelt werden. Dieses Ergebnis wird zur groben Korrektur der Frequenz, z.B. mittels eines vor dem FFT-Teil angeord-neten Multipliziers M benutzt, so daß bei weiteren Schritten die Frequenz-Abweichung kleiner ist als $\pm$1/2 Trägerab-stand.

Voraussetzung ist jedoch, daß die Position des Maximums vorher mit genügender Sicherheit bzw. einer Genauigkeit von besser als $\pm$1/2 Trägerabstand erkannt wurde. Zur genaueren Abschätzung der Position $l_{real,s}$ des Maximums kann folgende Berechnung durchgeführt werden:

$$l_{real,s} = l_{max,s} + W_{lmax,s,1} \, / \, (W_{lmax,s} + W_{lmax,s,1}) \\ * \, sgn(l_{max,s,1} - l_{max,s}),$$

wobei "sgn" das Vorzeichen der Positions-Differenz ist und der Wert des größten Maximums $W_{lmax,s}$ ist und an Position $l_{max,s}$ liegt und der nächstkleinere, mit $W_{lmax,s,1}$ bezeichnete Maximum-Wert (mit gleicher Polarität) entweder an der als $l_{max,s,1}$ bezeichneten Position $l_{max,s+1}$ oder $l_{max,s-1}$ liegt.

Diese Berechnungen können dadurch vereinfacht werden, daß die beiden Werte - das Maximum und das nächstkleinere Maximum - in der Reihenfolge der I-Werte benutzt werden. Die möglichen Positionen werden dann als $l_{1,s}$ (die erste Position) und $l_{2,s}$ bezeichnet, wobei das Maximum entweder bei $l_{1,s}$ oder bei $l_{2,s}$ liegen kann. Die Vorzei-chen-Funktion verschwindet dann:

$$l_{real,s} = l_{1,s} + W_{12,s} \, / \, (W_{11,s} + W_{12,s}) \, .$$

Zur Verbesserung der AFC können mehrere, vorzugsweise drei, solcher (zeitlich nacheinander gewonnener) Ergebnisse kombiniert oder gefiltert bzw. gemeinsam verarbeitet werden. Die nächste Frequenz-Auswertung kann nach größerem Abstand erfolgen, z.B. können zum Zweck der Synchronisations-Kontrolle insgesamt 3 bis 6 solcher Auswertungen pro Frame durchgeführt werden, um den Rechenaufwand in vernünftigen Größenordnungen zu halten.

Der auf diese Weise ermittelte Zwischenwert bzw. genauere Wert der Abweichung wird bereits bei der oben beschriebenen Frequenzkorrektur berücksichtigt. Die Frequenz-Grobeinstellung mit einer besseren Genauigkeit als $\pm$ 1/2 Trägerabstand ($-F_s/2 < \Delta f < F_s/2$) ist die Voraussetzung für die folgende Übernahme der AFG-Funktion durch die sogenannte Feinregelung.

Die erreichte Genauigkeit kann nach durchgeführter Grobeinstellung durch nochmaliges Überprüfen der Frequenz ermittelt werden. In diesem Fall sollte das Ergebnis $-F_s/3 < \Delta f < F_s/3$ sein. Wird dies nicht erreicht bzw. führt die anschließende Feinkorrektur zu einem Zustand, bei dem eine weitere Signalverarbeitung (Decodierung) nicht möglich ist, so müssen die oben beschriebenen Vorgänge mit einer um einen Trägerabstand versetzten Position (in Richtung der Seite mit dem nächstniedrigen oder möglicherweise gleichgroßen Korrelations-Ergebnis wiederholt werden.

Nach der groben Zeit-Synchronisation und/oder der groben AFC erfolgen bestimmte Auswertungen. Sowohl mit den Werten aus der zeitlichen Korrelation als auch mit denjenigen der Korrelation über der Frequenz wird (jeweils) ein Verhältnis gebildet aus dem ermittelten Wert des Maximums (bzw. Zentrumswert bei der zeitlichen Korrelation) und dem Durchschnittswert der nicht zum Maximum bzw. zum Zentrumsbereich gehörenden übrigen Korrelations-Teilergebnisse.

Aus den Ergebnissen der zeitlichen Korrelation kann z.B. ein Bereich der Länge $T_u$ herausgegriffen werden, wobei das Maximum nicht unbedingt in der Mitte liegen muß. Ein Bereich mit einer Länge von $\pm 1/2$ Guardintervall-Länge ist bei der Durchschnittswert-Berechnung auszusparen. Das Zentrum des Zentrumsbereiches kann z.B. dadurch ermittelt werden, daß die Punkte bei -6dB ermittelt werden und eine Mittelposition berechnet wird. Dies reduziert vorteilhaft den Einfluß von Rauschen und von Multipath-Effekten.

Für die Auswertung der über der Frequenz ermittelten Korrelations-Teilergebnisse wird z.B. der gesamte Bereich von $\pm 16$ Einzelschritten (beim 2K-Mode) bzw. $\pm 64$ Einzelschritten (beim 8K-Mode) benutzt. Auch hierbei kann das Hauptmaximum außerhalb der Mitte liegen und es können Nebenmaxima mit größerer Distanz vorhanden sein. Im Gebiet von $\pm F_s$ um das Hauptmaximum können ebenfalls Nebenlinien bestehen, die jedoch zum Hauptmaximum zu rechnen sind und durch eine Abweichung der Signallage vom Raster $F_s$ in der Größe von $-F_s/2 \leq \Delta f \leq F_s/2$ entstehen. Für die Auswertung empfiehlt es sich daher, den Maximalwert des Hauptmaximums und den benachbarten nächstkleineren Wert zusammenzufassen.

Der Durchschnittswert $C_{av}$ wird z.B. als quadratischer Mittelwert aller nicht zum Hauptmaximum bzw. Zentrumsbereich gehörenden Korrelations-Teilergebnisse berechnet:

$$C_{av} = \sqrt{\left( \left( \sum_{0}^{l_1} |W_l|^2 + \sum_{l_2}^{l_{max}} |W_l|^2 \right) / (l_1 + l_{max} - l_2 + 2) \right)},$$

wobei der Bereich $l_1+1$ bis $l_2-1$ den ausgesparten Teil betrifft. Bei komplexen Teilergebnissen ($W_l$) kann anstelle der Betragsbildung auch die Summe der Quadrate der Real- und Imaginärteile gebildet werden. Unter praktischen Gesichtspunkten sind weitere Vereinfachungen möglich, z.B. können bei Umstellung der Formel und entsprechend geänderten Mindestwerten anstelle der Division und der Berechnung der Quadratwurzel Multiplikationen durchgeführt werden, d.h. Quadrierung der Maximalwerte und Multiplikation mit dem in der Formel benutzten Divisor. Unter günstigen Signalbedingungen sowie geringeren Anforderungen an die Qualität der Aussage kann es ausreichen, nur den einfachen Mittelwert zu berechnen. Es ist ferner möglich, die Korrelations-Teilergebnisse mit einem vom Maximalwert (bzw. von der Summe aus dem Maximalwert und dem benachbarten nächstkleineren Wert) abgeleiteten Grenzwert einzeln zu vergleichen und daraus Aussagen über das Korrelationsergebnis insgesamt abzuleiten. Dies ist dann möglich, wenn generell ein ausreichender Abstand des Maximums zu den übrigen Teilergebnissen gewährleistet werden kann, was bei der Korrelation über der Frequenz der Fall ist.

Anschließend wird geprüft, ob das aus der zeitlichen Korrelation abgeleitete (erste) Verhältnis einen vorher festgelegten ersten Mindestwert überschreitet und das aus der über der Frequenz durchgeführten Korrelation abgeleitete (zweite) Verhältnis einen vorher festgelegten zweiten Mindestwert überschreitet. Überschreitet zumindest das erste Verhältnis den Mindestwert, oder optional, überschreiten beide Verhältnisse die für sie festgelegten Mindestwerte, so wird das empfangene Signal als systemkonform angesehen. Ist zumindest eine der Bedingungen nicht erfüllt, so wird das Signal als nicht-systemkonform angesehen.

Abhängig vom Ergebnis wird ein Empfangssignal während des Suchens bzw. beim Versuch ein bestimmtes Signal zu empfangen oder beim laufenden Empfang als "systemkonform" bzw. "vorhanden" oder "nicht-systemkonform" bzw. "nicht vorhanden" gekennzeichnet.

Die durchgeführten Prüfungen ergeben eine hohe Aussage-Sicherheit, bzw. die Wahrscheinlichkeit einer Falsch-Aussage ist extrem gering. Dies bedeutet, daß die nächsten Schritte gezielt erfolgen können. Bei negativem Ergebnis (d.h. keine System-Konformität) ist es z.B. nicht mehr notwendig, eine Decodierung des Signals einzuleiten, um die Konformität erneut zu überprüfen. Bei Signal-Suchvorgängen kann hierdurch viel Zeit eingespart und somit eine unnötige Wartezeit für den Benutzer des Empfängers vermieden werden.

Je nach aktuellem Kennzeichnungs-Zustand wird also beim Suchvorgang oder bei einer Empfangsprobe entweder die weitere Decodierung des Signals eingeleitet oder der Suchvorgang fortgesetzt oder bei der Empfangsprobe die Information "nicht vorhanden" ausgegeben.

Falls der Abstimmvorgang aufgrund der oben beschriebenen Ergebnisse weitergeführt werden soll, kann nun die Fein-AFC erfolgen. Dazu werden z.B. laufend die Phasenänderungen der kontinuierlichen Pilotsignale zwischen jeweils zwei aufeinanderfolgenden Symbolen einzeln bestimmt, die Ergebnisse gemittelt, aus den so ermittelten Endergebnis eine Frequenz-Abweichung berechnet und mit dieser eine Frequenzkorrektur des Signals vor der FFT durchgeführt. Die symbolweise nacheinander ermittelten Endergebnisse bzw. Frequenzabweichungen können vorteilhaft noch über mehrere Symbole zusammengefaßt und gefiltert werden.

Anschließend kann eine Rahmen-Synchronisation und eine Zeit-Fein-Synchronisation bzw. Abtast-Takt-Justierung erfolgen. Dies geschieht z.B. durch eine zeitliche Auswertung (pulse response) der 'scattered Pilots' und entsprechende Nachregelung des Abtast-Takt-Referenzoszillators, wobei (wiederum) zweckmäßigerweise mehrere zeitlich aufeinanderfolgende Werte zusammengefaßt und gefiltert werden.

Auch während des normalen Empfangs ist es zweckmäßig, die Überprüfung der groben Zeit - und Frequenz-Synchronisation (wie oben beschrieben) in gewissen Abständen vorzunehmen. Damit ist es möglich, einen Signalausfall oder ein Verschlechtern der Empfangsbedingungen oder einen Synchronisationsverlust des Empfängers schnell zu detektieren. Die Bedingungen dafür sind, daß $\Delta t$ und $\Delta f$ die Grenzwerte überschreiten oder die berechneten Verhältnisse die Mindestwerte unterschreiten. Der Ausdruck $\Delta t$ bezeichnet dabei die Abweichung des Zentrums der Impuls-Antwort (pulse response) von der Soll-Position.

Notwendige Gegen-Maßnahmen können schnell eingeleitet werden. Würde man das Erkennen eines solchen Zustands aus den Decodierprozessen ableiten (z.B. durch starken Anstieg der Fehlerrate), so wäre unter Umständen schon sehr viel Zeit verloren.

Bei der Synchronisations-Kontrolle bzw. der laufenden Überwachung des Signals oder des Empfangs wird in dem Fall, wenn der Kennzeichnungs-Zustand auf "nicht-systemkonform" übergeht, ein Kontroll- oder Warnsignal an die übrigen Teile des Empfängers ausgegeben, so daß unter bestimmten Bedingungen - z.B. Ausfall einiger Symbole - entsprechende Maßnahmen eingeleitet werden können wie z.B. ein "Einfrieren" des letzten akzeptablen Bildes und/oder ein Muting des Tonkanals.

Vorteilhaft können zum Erkennen bzw. zur Kennzeichnung des Signalzustandes während des laufenden Betriebs noch weitere Zustandsmeldungen, wie z.B. ständig gesetztes Fehler-Flag des Viterbi-Decoders, mitausgewertet werden.

Ein Vorteil der Erfindung liegt darin, daß die Sicherheit bei der Signal-Identifizierung wesentlich erhöht wird und die Identifizierung an frühestmöglicher Stelle innerhalb der empfangsseitigen Signaldecodierung und damit auch zum frühestmöglichen Zeitpunkt erfolgt, so daß keine unnötigen Wiedergabe-Unterbrechungen eingeleitet werden müssen. Andererseits erfolgt aber eine unbedingt notwendige Unterbrechung schnell. Damit können unvertretbare Störungen wie z.B. der Ausfall oder die falsche Decodierung von einigen oder sogar allen Bildpunkt-Blöcken eines Bildes bzw. laute oder abrupte Störgeräusche beim Ton weitestgehend vermieden werden.

Im Prinzip besteht das erfindungsgemäße Verfahren darin, daß für den Empfang von Multicarrier-Digitalsignalen, die in temporal-spektralen Rahmen angeordnet sind und Daten-Symbole mit einem Guardintervall und einer Nutzsymbollänge $T_u$ und Referenzinformationen enthalten, und die in verschiedenartigen Modi übertragen werden können, folgende Schritte zur Abstimmung beim Empfang oder zur Überprüfung der Systemkonformität der empfangenen Signale durchgeführt werden:

- grobe Zeitsynchronisation, bei der das Digitalsignal in zeitlicher Richtung korreliert wird mit dem um verschiedene, den möglichen Modi entsprechende Werte von $T_u$ zeitlich verschobenen Digitalsignal, wobei der aktuelle Modus aus der Lage und den Beträgen von Maxima der Korrelationswerte ermittelt wird und das aktuelle Guardintervall aus Abständen von Maxima der Korrelationswerte ermittelt wird und danach ein daraus sich ergebendes Abtastfenster mit einer $T_u$ entsprechenden Länge für Transformationsmittel und eine sich anschließende Signalauswertung gesetzt wird;

- grobe AFC-Korrektur mit Hilfe von vor den Transformationsmitteln angeordneten Multipliziermitteln und mit Hilfe von nach den Transformationsmitteln angeordneten Grob-AFC-Mitteln, wobei dem Anordnungs-Schema der Referenzinformationen entsprechende Informationen des aktuellen Symbols dem Ausgangssignal der Transformationsmittel entnommen und in den Grob-AFC-Mitteln mit einem festgelegten Daten-Schema korreliert werden, wobei die Art dieser Korrelation entsprechend dem aktuellen Modus gewählt wird;

- qualitative Auswertung der Ergebnisse der groben Zeitsynchronisation und der zur groben AFC-Korrektur gehörenden Korrelations-Ergebnisse, um die System-Konformität und Empfangsqualität der Digitalsignale zu bestimmen.

Vorteilhafte Weiterbildungen des erfindungsgemäßen Verfahrens ergeben sich aus den zugehörigen abhängigen Ansprüchen.

Im Prinzip ist der erfindungsgemäße Empfänger für Multicarrier-Digitalsignale, die in temporal-spektralen Rahmen angeordnet sind und Daten-Symbole mit einem Guardintervall und einer Nutzsymbollänge $T_u$ und Referenzinformationen enthalten, und die in verschiedenartigen Modi übertragen werden können, versehen mit:

- Multipliziermitteln und Transformationsmitteln für das Digitalsignal;

- groben Zeit-Synchronisationsmitteln, in denen zur Abstimmung beim Empfang oder zur Überprüfung der Systemkonformität der empfangenen Signale das Digitalsignal in zeitlicher Richtung korreliert wird mit dem um verschiedene, den möglichen Modi entsprechende Werte von $T_u$ zeitlich verschobenen Digitalsignal, wobei der aktuelle Modus aus der Lage und den Beträgen von Maxima der Korrelationswerte ermittelt wird und das aktuelle Guardintervall aus Abständen von Maxima der Korrelationswerte ermittelt wird und danach ein daraus sich ergebendes Abtastfenster mit einer $T_u$ entsprechenden Länge für Transformationsmittel und die nachfolgende Signalauswertung gesetzt wird;

- Grob-AFC-Mitteln für vor den Transformationsmitteln angeordnete Multipliziermittel, in denen eine grobe AFC-Korrektur mit Hilfe von dem Anordnungs-Schema der Referenzinformationen entsprechenden Informationen des aktuellen Symbols durchgeführt wird, die dem Ausgangssignal der Transformationsmittel entnommen und in den Grob-AFC-Mitteln mit einem festgelegten Daten-Schema korreliert werden, wobei die Art dieser Korrelation entsprechend dem aktuellen Modus gewählt wird;

- Auswerte-Mitteln zur qualitativen Auswertung der Ergebnisse der groben Zeit-Synchronisationsmittel und der in den Grob-AFC-Mitteln ermittelten Korrelations-Ergebnisse, die die System-Konformität und Empfangsqualität der Digitalsignale bestimmen.

Vorteilhafte Weiterbildungen des erfindungsgemäßen Empfängers ergeben sich aus den zugehörigen abhängigen Ansprüchen.

Zeichnung

Anhand der Zeichnung ist ein Ausführungs-Beispiel der Erfindung beschrieben.

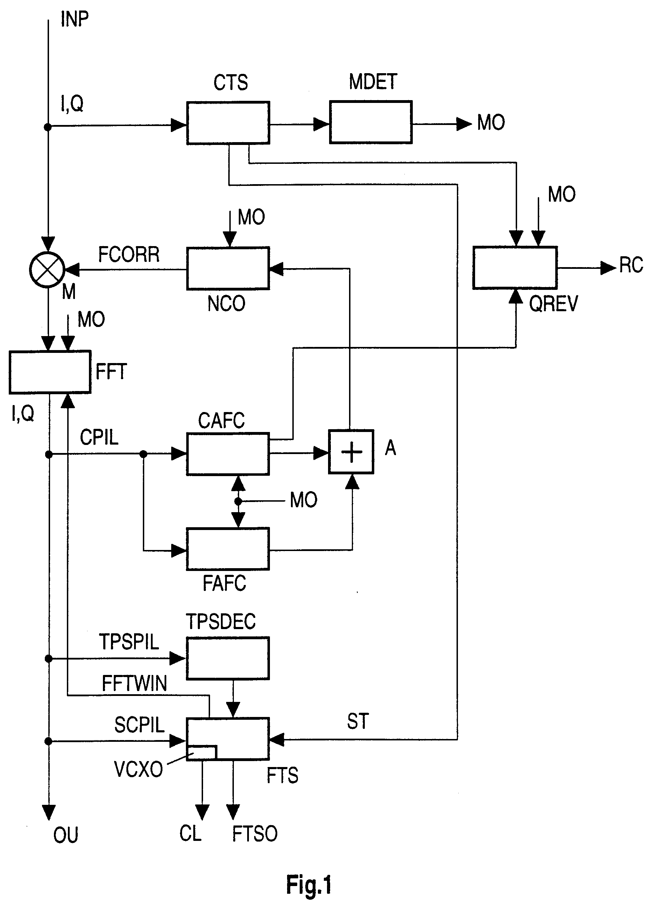

Fig. 1 zeigt das Blockschaltbild für einen erfindungsgemäßen Empfänger.

Ausführungs-Beispiele

In dem Empfänger gemäß Fig. 1 wird zunächst für das digitale Eingangssignal INP in Grob-Zeitsynchronisations-Mitteln CTS eine grobe Synchronisation durchgeführt. Dabei wird das Zeitsignal mit dem um eine Nutzsymbollänge $T_u$ verschobenen Zeitsignal, z.B. zweimal bis fünfmal pro Daten-Frame, korreliert. Bei dieser Korrelation werden Proben mit verschiedener Länge $T_u$ entsprechend dem jeweiligen Mode verwendet und anhand der sich ergebenden, gefilterten bzw. gemittelten Korrelations-Ergebnis-Maxima wird dann in Mode-Detektormitteln MDET auf den aktuell vorliegenden Mode MO (z.B. 2K-oder 8K-Mode) geschlossen, z.B. durch Vergleich der Maxima mit einem gespeicherten Schwellwert. MDET gibt eine entsprechende Mode-Information MO ab.
Falls sich kein brauchbares Korrelations-Ergebnis-Maximum ergibt, können die Korrelationsschritte in CTS wiederholt werden. Aus dem Abstand der Korrelations-Maxima wird in CTS unter Berücksichtigung des Modes das verwendete Guardintervall ermittelt und nachfolgend ein Abtastfenster positioniert, z.B. durch einmaliges Setzen eines zur Symbolfolge $(T_u+\Delta)$ synchronen Zählers in CTS, der ein Zeitfenster mit Dauer $T_u$ ausgibt, z.B. mittels eines Startsignals ST, welches Zeit-Feinsynchronisations-Mitteln FTS zugeführt wird. Mittels eines dabei benutzten Basis-Oszillators VCX0 werden in FTS die Position des Abtast-Fensters FFTWIN und der Abtast-Takt nachgeregelt.
Das aus einem I- und Q-Anteil bestehende Eingangssignal INP wird in einem Multiplizierer M mit einem aus einem Oszillator NCO stammenden Frequenz-Korrektursignal FCORR multipliziert. Das mit FFTWIN selektierte Ausgangssignal von M wird in Fast-Fourier-Transformationsmitteln FFT in den Frequenzbereich umgesetzt und bildet letztlich das aus einem I- und Q-Anteil bestehende Ausgangssignal OU.
Falls der Mode richtig erkannt und das Abtastfenster annähernd korrekt positioniert wurde, kann eine grobe AFC durch Grob-AFC-Mittel CAFC erfolgen. Dazu werden die vorgesehenen kontinuierlichen Pilotsignalen CPIL des aktuellen Symbols eines Datenrahmens dem Ausgangssignal von FFT entnommen und in CAFC mit einem festgelegten Schema korreliert (45 Positionen beim 2K-Mode, 177 Positionen beim 8K-Mode), und zwar über ±16 Shifts beim 2K-Mode bzw. ±64 Shifts beim 8K-Mode. Die Art der Korrelation wird entsprechend MO gewählt.
Zur Verbesserung der Grob-AFC können mehrere solcher Ergebnisse über eine bestimmte Anzahl, z.B. 3 bis 10, von Symbolen kombiniert oder gemeinsam verarbeitet werden, z.B. durch Mittelung, Majoritätsbildung oder Tiefpaß-Filterung. Das Maximum des Korrelationsvorgangs bzw. die aus mehreren solcher Maxima entsprechend abgeleitete Größe ergibt die grobe Frequenzabweichung $\Delta f = p'^* F_s$ und dient als Steuersignal für den Oszillator NCO. Die nächste Auswertung kann nach einem gewissen Abstand erfolgen, z.B. 3 bis 6 mal pro Rahmen. Wenn $\Delta f$ einen vorgegebenen Wert $D_{max}$ (z.B. $D_{max} = F_s/3$) unterschreitet, kann die entsprechende NCO-Abstimmung zunächst beibehalten werden und zur Fein-AFC in Fein-AFC-Mitteln FAFC übergegangen werden, denen ebenfalls die vorgesehenen kontinuierlichen Pilotsignalen CPIL des aktuellen Symbols zugeführt werden. Die Ausgangssignale von CAFC und FAFC werden in einem Komoinierer A kombiniert und als gemeinsames Steuersignal NCO zugeführt.
In einer Auswerte-Schaltung QREV werden die Korrelationsergebnisse aus CTS und CAFC qualitativ ausgewertet. Dazu erhält QREV ebenfalls die Mode-Information MO. Das Ausgangssignal RC von QREV steuert dann entsprechende Teile des Empfängers.
Nach Positionieren des Abtastfensters und/oder Erreichen von $\Delta f < D_{max}$ werden die obengenannten Bedingungen in bestimmten zeitlichen Abständen zum Zweck der Synchronisations-Kontrolle überprüft. Bei z.B. 2 bis 10-maligem negativem Ergebnis erfolgt ein Neustart mit der groben Zeit-Synchronisation in CTS.
Abhängig vom bisherigen Abstimmungs-Ergebnis wird das empfangene Signal im Empfänger als "systemkonform" bzw. "vorhanden" oder "nicht-systemkonform" bzw. "nicht vorhanden" gekennzeichnet. Je nach diesem aktuellen Kennzeichnungs-Zustand wird beim Suchvorgang oder bei einer Empfangsprobe entweder die weitere Decodierung des Signals eingeleitet oder der Suchvorgang fortgesetzt oder bei der Empfangsprobe die Information "nicht vorhanden" ausgegeben.

Falls der Abstimmvorgang weitergeführt werden soll, kann nun eine Fein-AFC erfolgen. Dazu wird die Phasenänderung der kontinuierlichen Pilotsignalen CPIL von Symbol zu Symbol bestimmt und über sämtliche Pilotsignalen CPIL (45 beim 2K-Mode, 177 beim 8K-Mode) gemittelt. Diese Mittelwerte können tiefpaß-gefiltert werden und können, da sie proportional zu Δf sind, ebenfalls dem Oszillator NCO zugeführt werden, z.B. mittels Kombination in A, jedoch mit verminderter Steilheit.

Anschließend erfolgt eine Rahmen-Synchronisation und eine Zeit-Feinsynchronisation bzw. Abtast-Takt-Justierung. Dieses geschieht durch Auswertung der dem Ausgangssignal von FFT entnommenen TPS-Pilotzellen TPSPIL, die in einem TPS-Decoder TPSDEC decodiert werden. Dessen Ausgangssignal wird ebenfalls den Zeit-Feinsynchronisations-Mitteln FTS zugeführt und bewirkt eine entsprechende Nachregelung des Basis-Oszillators VCX0 zur Gewinnung des Abtast-Taktes CL sowie eine Korrektur der Position des Abtastfensters FFTWIN. Der Rahmenanfang (FTS-Ausgangssignal FTSO) und die Position der 'scattered Pilots' wird mit Hilfe der Sync-Sequenz der TPS-Pilotzellen durch Korrelation bestimmt. Der Abtast-Takt CL wird allen in Fig. 1 dargestellten Schaltungsteilen zugeführt.

Die 'scattered Pilots' können in FTS zeitlich so interpoliert werden, daß jeder dritte Träger als 'scattered Pilot' angesehen werden kann. Die Impuls-Antwort wird auf Basis der über die Zeit interpolierten 'scattered Pilots' mit Hilfe einer Division durch die spezifizierten 'scattered Pilots'Sollwerte und einer inversen FFT ermittelt. Anschließend wird die Abweichung des Zentrums der ImpulsAntwort von einer für optimalen Empfang gewünschten Sollposition festgestellt. Dieser Vorgang wird vorteilhaft 3 bis 7 mal pro Rahmen wiederholt. Das Ergebnis wird vorteilhaft blockweise gefiltert und dann weiterverwertet. Aus der Größe und Richtung der so ermittelten Abweichung wird der Abtast-Takt-Referenzoszillator VCX0 in FTS nachgeregelt. Diese Nachregelung kann auch mittels Oszillator NCO und Multiplizierer M erfolgen. NCO kann eine digitale PLL enthalten.

Die Erfindung kann in DVB-Empfängern oder in Empfängern für vergleichbare digitale Signale zum Einsatz kommen, z.B. auch in DAB-Empfängern. Die angegebenen Zahlenwerte werden dann entsprechend geändert und die einzelnen Synchronisationsoder Überprüfungs-Schritte werden an die in den Rahmen aktuell übertragenen Referenz- oder Synchronisations-Daten angepaßt. Beim DAB-Empfänger wird dann anstelle des hier beschriebenen Grob-AFC-Korrelationsverfahrens (Basis sind kontinuierliche Pilotsignale) das in EP-A-0 786 889 beschriebene Verfahren (Basis sind CAZAC-Symbole) verwendet. Die qualitative Auswertung der erzielten Korrelationsergebnisse ist im Wesentlichen identisch. Die erfindungsgemäßen Auswertungen sind besonders vorteilhaft in kombinierten Empfängern (DAB und DVB-T oder digital und analog).

**Patentansprüche**

1.	Verfahren für den Empfang von Multicarrier-Digitalsignalen (INP), die in temporal-spektralen Rahmen angeordnet sind und Daten-Symbole mit einem Guardintervall und einer Nutzsymbollänge $T_u$ und Referenzinformationen (CPIL, SCPIL, TPSPIL) enthalten, und die in verschiedenartigen Modi (MO, 2k, 8k) übertragen werden können, **gekennzeichnet** durch folgende Schritte zur Abstimmung beim Empfang oder zur Überprüfung der Systemkonformität der empfangenen Signale:

- grobe Zeitsynchronisation (CTS), bei der das Digitalsignal (INP) in zeitlicher Richtung korreliert wird mit dem um verschiedene, den möglichen Modi entsprechende Werte von $T_u$ zeitlich verschobenen Digitalsignal (INP), wobei der aktuelle Modus (MO) aus der Lage und den Beträgen von Maxima der Korrelationswerte ermittelt wird und das aktuelle Guardintervall aus Abständen von Maxima der Korrelationswerte ermittelt wird und danach ein daraus sich ergebendes Abtastfenster mit einer $T_u$ entsprechenden Länge für Transformationsmittel (FFT) und eine sich anschließende Signalauswertung gesetzt wird;
- grobe AFC-Korrektur mit Hilfe von vor den Transformationsmitteln angeordneten Multipliziermitteln (M) und mit Hilfe von nach den Transformationsmitteln angeordneten Grob-AFC-Mitteln (CAFC), wobei dem Anordnungs-Schema der Referenzinformationen entsprechende Informationen (CPIL) des aktuellen Symbols dem Ausgangssignal der Transformationsmittel (FFT) entnommen und in den Grob-AFC-Mitteln mit einem festgelegten Daten-Schema korreliert werden, wobei die Art dieser Korrelation entsprechend dem aktuellen Modus (MO) gewählt wird;
- qualitative Auswertung der Ergebnisse der groben Zeitsynchronisation (CTS) und der zur groben AFC-Korrektur gehörenden Korrelations-Ergebnisse, um die System-Konformität und Empfangsqualität der Digitalsignale (INP) zu bestimmem.

2.	Verfahren nach Anspruch 1, wobei die Referenzinformationen kontinuierliche Pilotsignalen (CPIL), verstreute Pilotzellen (SCPIL) und TPS-Pilotzellen (TPSPIL) umfassen und bei der groben AFC-Korrektur kontinuierlichen Pilotsignalen (CPIL) entsprechende Informationen des aktuellen Symbols dem Ausgangssignal der Transformationsmittel (FFT) entnommen und in den Grob-AFC-Mitteln mit dem festgelegten Daten-Schema korreliert werden.

3. Verfahren nach Anspruch 1 oder 2, wobei, falls sich bei der groben Zeitsynchronisation (CTS) kein brauchbares Korrelations-Ergebnis-Maximum ergibt, die Korrelationsschritte wiederholt werden.

4. Verfahren nach einem oder mehreren der Ansprüche 1 bis 3, wobei jeweils mehrere Korrelations-Ergebnisse bei der groben AFC-Korrektur (CAFC) gemittelt oder gefiltert oder einer Majoritätsentscheidung zugeführt werden und wobei diese Ergebnisse auch bei der qualitativen Auswertung benutzt werden.

5. Verfahren nach einem oder mehreren der Ansprüche 1 bis 4, wobei bei der groben AFC-Korrektur (CAFC) aus jeweils mehreren zur Gruppe des Korrelations-Maximums gehörenden Werten die aktuelle Frequenzabweichung bestimmt wird.

6. Verfahren nach einem oder mehreren der Ansprüche 1 bis 5, wobei die Ergebnisse der qualitativen Auswertung zur Entscheidung darüber benutzt werden, ob die weitere Decodierung der Digital-Signale eingeleitet oder ein begonnener Signal-Suchvorgang mit neuer Frequenzeinstellung des Empfängers fortgesetzt werden soll.

7. Verfahren nach einem oder mehreren der Ansprüche 2 bis 6, wobei, falls die Frequenzabweichung eine festgelegte erste Schwelle unterschreitet, von der groben AFC-Korrektur (CAFC) auf eine Fein-AFC (FAFC) übergegangen wird, deren Steuergröße von der von Symbol zu Symbol festgestellten Phasenänderung der kontinuierlichen Pilotsignalen (CPIL) abgeleitet wird.

8. Verfahren nach einem oder mehreren der Ansprüche 2 bis 7, wobei beim laufendem Empfang, d.h. bei bereits erfolgter Decodierung der Digital-Signale, im Fall, daß die gesetzten Kriterien nicht mehr erfüllt sind, Maßnahmen wie ein Muting des Tons und/oder ein Einfrieren des Bildes in den nachfolgenden Empfängerstufen eingeleitet werden.

9. Verfahren nach einem oder mehreren der Ansprüche 2 bis 8, wobei nach der qualitativen Ergebnis-Auswertung eine Zeit-Feinsynchronisation durch Rahmen- und Abtasttakt-Synchronisationsmittel (FTS, TPSDEC) stattfindet, bei der eine Synchronisations-Sequenz aus dem Ausgangssignal der Transformationsmittel (FFT) entnommenen TPS-Pilotzellen (TPSPIL) dazu verwendet wird, die Rahmenposition und die Position der ebenfalls dem Ausgangssignal der Transformationsmittel (FFT) entnommenen verstreuten Pilotzellen (SCPIL) im Rahmen zu bestimmen und wobei die Abweichung des Zentrums einer mit Hilfe der verstreuten Pilotzellen gewonnenen Impuls-Antwort von einem Sollwert dazu verwendet wird, einen entsprechenden Abtast-Takt (CL) zu justieren.

10. Verfahren nach Anspruch 9, wobei bei der Zeit-Feinsynchronisation (FTS, TPSDEC) die verstreuten Pilotzellen (SCPIL) temporal interpoliert werden, um die Impuls-Antwort zu gewinnen.

11. Verfahren nach Anspruch 9 oder 10, wobei bei der Zeit-Feinsynchronisation (FTS, TPSDEC) die Abweichung vom Sollwert mehrfach festgestellt und diese Ergebnisse kombiniert werden.

12. Verfahren nach einem oder mehreren der Ansprüche 1 bis 11, wobei nach Positionieren des Abtastfensters und/oder Erreichen einer Frequenzabweichung, die kleiner ist als ein zweiter Schwellwert, die grobe AFC-Korrektur in bestimmten Abständen überprüft wird und, falls mehrfach die Frequenzabweichung größer ist als der zweite Schwellwert, ein Neustart der groben AFC-Korrektur erfolgt.

13. Empfänger für Multicarrier-Digitalsignale (INP), die in temporal-spektralen Rahmen angeordnet sind und Daten-Symbole mit einem Guardintervall und einer Nutzsymbollänge $T_u$ und Referenzinformationen (CPIL, SCPIL, TPSPIL) enthalten, und die in verschiedenartigen Modi (MO, 2k, 8k) übertragen werden können, versehen mit:

- Multipliziermittel (M) und Transformationsmit-tel (FFT) für das Digitalsignal (INP);
- grobe Zeit-Synchronisationsmittel (CTS), in denen zur Abstimmung beim Empfang oder zur Überprüfung der Systemkonformität der empfangenen Signale das Digitalsignal (INP) in zeitlicher Richtung korreliert wird mit dem um verschiedene, den möglichen Modi entsprechende Werte von $T_u$ zeitlich verschobenen Digitalsignal (INP), wobei der aktuelle Modus (MO) aus der Lage und den Beträgen von Maxima der Korrelationswerte ermittelt wird und das aktuelle Guardintervall aus Abständen von Maxima der Korrelationswerte ermittelt wird und danach ein daraus sich ergebendes Abtastfenster mit einer $T_u$ entsprechenden Länge für Transformationsmittel (FFT) und die nachfolgende Signalauswertung gesetzt wird;

- Grob-AFC-Mitteln (CAFC) für vor den Transformationsmitteln angeordnete Multipliziermittel (M), in denen eine grobe AFC-Korrektur mit Hilfe von dem Anordnungs-Schema der Referenzinformationen entsprechende Informationen (CPIL) des aktuellen Symbols durchgeführt wird, die dem Ausgangssignal der Transformationsmittel (FFT) entnommen und in den Grob-AFC-Mitteln mit einem festgelegten Daten-Schema korreliert werden, wobei die Art dieser Korrelation entsprechend dem aktuellen Modus (MO) gewählt wird;

- Auswerte-Mittel zur qualitativen Auswertung der Ergebnisse der groben Zeit-Synchronisationsmittel (CTS) und der in den Grob-AFC-Mitteln (CAFC) ermittelten Korrelations-Ergebnisse, die die System-Konformität und Empfangsqualität der Digitalsignale (INP) bestimmem.

14. Empfänger nach Anspruch 13, wobei die Referenzinformationen kontinuierliche Pilotsignalen (CPIL), verstreute Pilotzellen (SCPIL) und TPS-Pilotzellen (TPSPIL) umfassen und für die Grob-AFC-Mittel (CAFC) kontinuierliche Pilotsignalen (CPIL) des aktuellen Symbols dem Ausgangssignal der Transformationsmittel (FFT) entnommen und in den Grob-AFC-Mitteln mit dem festgelegten Daten-Schema korreliert werden.

15. Empfänger nach Anspruch 13 oder 14 mit Rahmen- und Abtasttakt-Synchronisationsmitteln (FTS, TPSDEC), in denen eine Zeit-Feinsynchronisation durchgeführt wird durch Auswertung von einer Synchronisations-Sequenz aus dem Ausgangssignal der Transformationsmittel (FFT) entnommenen TPS-Pilotzellen (TPSPIL), um die Rahmenposition und die Position der ebenfalls dem Ausgangssignal der Transformationsmittel (FFT) entnommenen verstreuten Pilotzellen (SCPIL) im Rahmen zu bestimmen, wobei die Abweichung des Zentrums einer mit Hilfe der verstreuten Pilotzellen gewonnenen Impuls-Antwort von einem Sollwert ausgewertet wird, um einen Abtast-Takt (CL) zu justieren.

Fig.1

Europäisches
Patentamt

**EUROPÄISCHER RECHERCHENBERICHT**

Nummer der Anmeldung

EP 97 11 2929

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO 97 26742 A (FRANCE TELECOM; TELEDIFFUSION DE FRANCE; HELARD ET AL.) <br> * Zusammenfassung * <br> * Seite 2, Zeile 5 - Zeile 13 * <br> * Seite 3, Zeile 3 - Zeile 13 * <br> * Seite 4, Zeile 27 - Zeile 29 * <br> --- | 1-15 | H04L27/26 <br> H04L27/00 <br> H04H1/00 |
| A | DE 44 03 408 C (GRUNDIG) <br> * Zusammenfassung * <br> * Spalte 1, Zeile 48 - Zeile 58 * <br> --- | 1,13 | |
| A | EP 0 562 422 A (GENERAL INSTRUMENT CORPORATION) <br> * Zusammenfassung * <br> --- | 1,13 | |
| A | WO 97 07620 A (PHILIPS; PHILIPS) <br> * Zusammenfassung; Abbildung 3 * <br> * Seite 2, Zeile 26 - Zeile 39 * <br> --- | 1-15 | |
| A | EP 0 653 858 A (TOSHIBA) <br> * Zusammenfassung * <br> * Spalte 2, Zeile 39 - Zeile 52 * <br> * Spalte 3, Zeile 27 - Zeile 31 * <br> --- | 1-15 | RECHERCHIERTE SACHGEBIETE (Int.Cl.6) <br><br> H04L |
| E | EP 0 786 889 A (THOMSON BRANDT) <br> * Seite 3, Zeile 20 - Zeile 37 * <br> * Seite 3, Zeile 57 - Zeile 59 * <br> * Seite 4, Zeile 19 - Zeile 25 * <br> ------ | 1-15 | |

Der vorliegende Recherchenbericht wurde für alle Patentansprüche erstellt

| Recherchenort | Abschlußdatum der Recherche | Prüfer |
|---|---|---|
| DEN HAAG | 9.Dezember 1997 | Scriven, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)